# EUROPEAN PATENT APPLICATION

(11) **EP 3 772 863 A1**
(43) Date of publication of application: **10.02.2021**
(21) Application number: 19465541.1
(22) Date of filing: 06.08.2019
(51) Int. Cl.: H04W 12/06, H04L 29/06, H04L 9/08

(54) **ELECTRONIC KEY AND METHOD FOR WIRELESS FLASHING OF AN ELECTRONIC KEY**

(71) Applicant: Continental Automotive GmbH, 30165 Hannover (DE)
(72) Inventor: Stef, Adrian Viorel, 300756 Timisoara (RO); Coicheci, Cosmin, 300743 Timisoara (RO)

(57) **Abstract**

A method for at least partly updating software installed on an electronic key (30) for a vehicle comprises, upon occurrence of a triggering event, establish a wireless connection between an external server (41) and the electronic key (30), perform an authentication process between the external server (41) and the electronic key (30) via the wireless connection, and if the electronic key (30) has been authenticated as being the related electronic key (30) to the vehicle, generate a new secret encryption key in the external server (41). The method further comprises encrypting a file including information concerning the software update with the new secret encryption key, sending the encrypted file from the external server (41) to the electronic key (30), decrypting the file in the electronic key (30), and at least partly updating the software installed on the electronic key (30), taking into account the information included in the file received from the external server (41).

## Description

The current invention relates to an electronic key and a related method for wireless flashing of an electronic key, in particular an electronic key for a vehicle.

Most vehicles today may be unlocked and started using an electronic key. Some start and access systems are known in which the user needs to press an unlocking button on the electronic key to unlock the vehicle. In order to start the vehicle, the key usually has to be inserted into an arrangement which replaces the ignition switch, as is known from older vehicles. Other start and access systems are known in which the vehicle may be unlocked and started without the user having to press a button or having to insert the key in any arrangement. Such start and access systems are often called keyless start and entry systems. With keyless start and entry systems, the vehicle may be unlocked automatically when the key is detected within a certain distance from the vehicle. In order to start the vehicle, a start button within the vehicle usually has to be pressed.

However, the key more and more takes over other tasks in addition to communicating a user's wish to unlock/lock or start a vehicle. For example, information about a current tire pressure of the vehicle's tires may be requested from the vehicle. Any other information may be retrieved from the vehicle wirelessly. An according software may be installed on the key, in order to perform the different tasks.

The software, however, may require reprogramming or updating from time to time when bugs are discovered or new tasks to be performed by the key are added, for example. It is generally possible to update the key's software wirelessly by means of so-called software flashing.

There is a need to provide an improved electronic key and wireless flashing method which provide a high security level and which allow to easily update software installed on a key.

This problem is solved by a method according to claim 1 and an electronic key according to claim 7. Configurations and further developments of the invention are the subject of the dependent claims.

A method for at least partly updating software installed on an electronic key for a vehicle includes, upon occurrence of a triggering event, establish a wireless connection between an external server and the electronic key, perform an authentication process between the external server and the electronic key via the wireless connection, and if the electronic key has been authenticated as being the related electronic key to the vehicle, generate a new secret encryption key in the external server. The method further comprises encrypting a file including information concerning the software update with the new secret encryption key, sending the encrypted file from the external server to the electronic key, decrypting the file in the electronic key, and at least partly updating the software installed on the electronic key, taking into account the information included in the file received from the external server.

By generating a new secret key each time a file is to be transmitted from the external server to the transponder unit (each time a software update is to be performed), the security of the system is increased.

The new secret encryption key may not have been used to encrypt another file before and may subsequently not be used for any other encryption processes.

The triggering event may either comprise a user request, or the triggering event may comprise an inquiry of the external server followed by a user confirmation.

In this way it can be assured that the user agrees to perform the (partial) software update.

The user request or confirmation may be received via a portable electronic device.

The portable electronic device may be a smartphone which the user carries with him and which comprises a user interface, for example.

The new secret encryption key generated by the external server may be generated using an Advanced Encryption Standard (AES).

This is one reliable standard that may be used to generate encryption keys.

The file sent from the external server to the electronic key may be a hexadecimal source file.

An electronic key for a vehicle may include a communication microcontroller and a specific key microcontroller. The communication microcontroller is configured to perform an authentication process between the electronic key and an external server and via a wireless connection, and to, after the electronic key has been authenticated as being the related electronic key to the vehicle, receive an encrypted file from the external server, the file including information concerning a software update, wherein the file is encrypted with a new secret encryption key generated in the external server. The communication microcontroller is further configured to forward the file to the specific key microcontroller. The specific key microcontroller is configured to decrypt the file, and to at least partly update a software installed on the electronic key, taking into account the information included in the file received from the external server.

The specific key microcontroller may be further configured to, via the communication microcontroller, send a random key to the external server, wherein the random key may be used by the external server for the generation of the new secret encryption key.

The specific key microcontroller may be further configured to, after the electronic key has been authenticated as being the related electronic key to the vehicle, generate a new secret encryption key, and to use this new secret encryption key for decrypting the file received from the external server.

By generating a new secret key each time a file is to be transmitted from the external server to the transponder unit (each time a software update is to be performed), the security of the system is increased.

Examples are now explained with reference to the drawings. In the drawings the same reference characters denote like features.
- Figure 1: illustrates the general principle of an electronic vehicle key.
- Figure 2A: schematically illustrates in a block diagram a system comprising an electronic key according to one example of the present invention.
- Figure 2B: schematically illustrates in a block diagram a system comprising an electronic key according to another example of the present invention.
- Figure 3: schematically illustrates in a block diagram a system comprising an electronic key according to one example of the present invention
- Figure 4: schematically illustrates in a block diagram an exemplary key comprising a microcontroller.
- Figure 5: schematically illustrates in a sequence diagram a method for operating an electronic key according to the present invention.
- Figure 6: schematically illustrates in a flow diagram a method for operating an electronic key according to the present invention.
- Figure 7: schematically illustrates in a sequence diagram a method for operating an electronic key according to the present invention.
- Figure 8: exemplarily illustrates in a flow diagram a method according to the present invention.

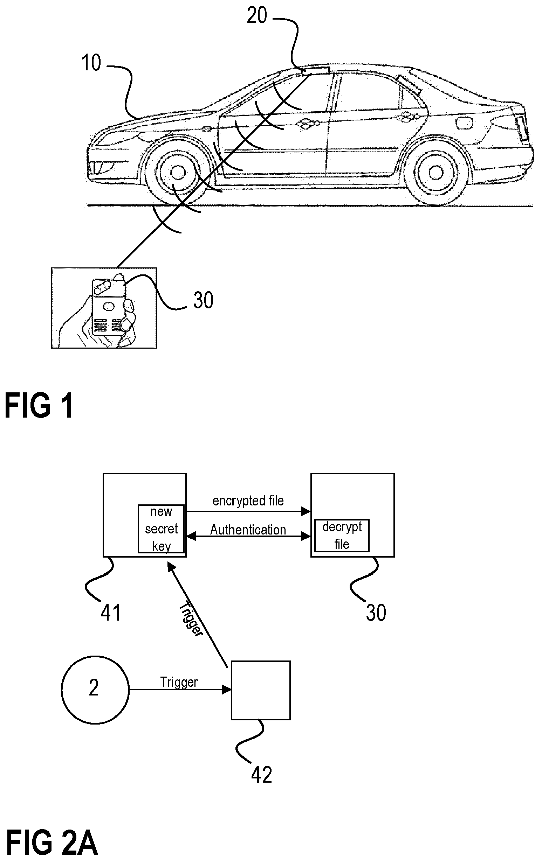

Figure 1 illustrates a vehicle 10 with a keyless start and entry system. The start and entry system comprises a control unit 20. The control unit 20 may be arranged anywhere within or on the vehicle 10. The control unit 20 is configured to trigger an unlocking or engine start process if an electronic key belonging to the vehicle 10 is detected near or inside the vehicle 10. The control unit 20 sends out inquiry signals. Such inquiry signals are usually low frequency (about 20kHz to 200kHz) signals. The inquiry signals are coded with a first coding chart. The inquiry signals may be received by a transponder unit 30 if the transponder unit 30 is within the range of the signals. The transponder unit 30 decodes, analyses and/or further processes the inquiry signals. After further processing the inquiry signals, the transponder unit 30 sends response signals back to the control unit 20. The response signals are coded with a second coding chart. The response signals may be generated by means of load modulation, for example, and may be decoded within the vehicle 10.

The vehicle 10 knows both coding charts and compares the original inquiry signals with the received response signals. If the response signals are identified as being correct, the vehicle 10 may be unlocked. If a start button is pressed and the response signals are identified as being correct, the vehicle 10 may be started. If, after sending the inquiry signals, no response signals or incorrect response signals are received within a certain time, nothing happens and the vehicle 10 remains locked and/or turned off.

The transponder unit 30 may be arranged within an electronic vehicle key. The control unit 20 may send out inquiry signals in regular intervals or in response to a certain trigger event. Such a trigger event may be the user touching the door handle or pressing a start button, for example. The vehicle 10 may be any kind of vehicle, for example a passenger car, a truck, a bus, a train, a tractor, a motorcycle, a boat, or an aircraft.

Communication between the transponder unit 30 and the vehicle 10 is often implemented in form of a bidirectional communication link enabling a user to not only present his verification, but also to retrieve data from the vehicle controls or to perform special functions like, e.g., turning on an engine block heater, or the like.

Apart from access control, communication between the transponder unit 30 and the vehicle 10 is further used for wirelessly connecting peripheral car systems that are generally difficult to reach, e.g., tire pressure controls. A link is established between the transponder unit 30 and the control unit 20 of the vehicle 10. The control unit 20 may be in wired or wireless contact with one or more car systems inside the vehicle 10. It is, however, also possible that the transponder unit 30 is in direct contact with one or more car systems of the vehicle 10 (additional car systems not specifically illustrated in Figure 1).

In order to be able to perform a plurality of tasks, generally a corresponding software is installed on the transponder unit 30. Such software is usually installed by the car manufacturer before the vehicle 10 is first delivered to a user. However, the software may later have to be updated from time to time. An update may be required if bugs are detected or if further functions are added, for example. Wireless systems and methods are known which allow for a wireless flashing of the corresponding software in order to update the transponder unit's software. The term "flashing" is usually used to describe the process of reprogramming a device. During flashing, the software already present on the transponder unit 30 may be updated in part or completely.

Now referring to Figure 2A, an exemplary system for wirelessly updating the software installed on a transponder unit 30 is schematically illustrated. The system comprises an external server 41 and a portable electronic device 42 such as a smartphone, for example. The portable electronic device 42 may be the user's device, the user also being the owner of the transponder unit 30. The external server 41 may be operated by the manufacturer of the user's vehicle 10, by a software provider or any other related or independent institution which provides software updates for the transponder unit 30.

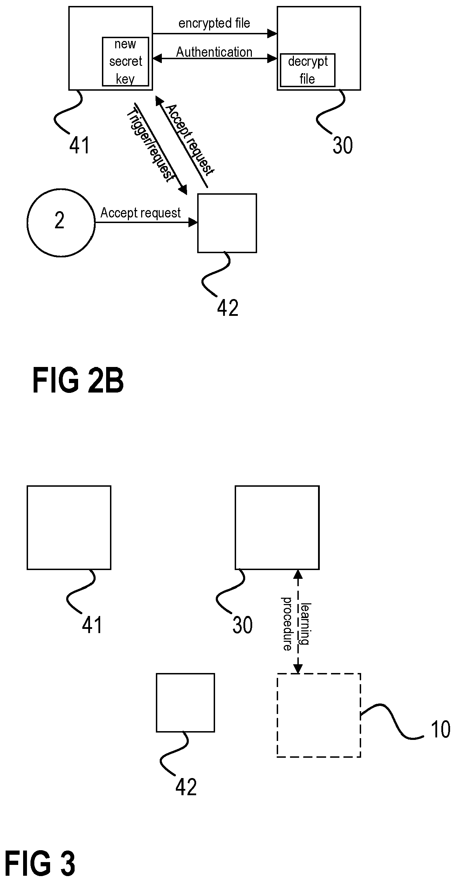

The vehicle 10 itself is not necessarily needed during the process of updating the transponder unit's software. However, a case which may require establishing a connection of the transponder unit 30 with the vehicle 10 after performing a software update will be described with respect to Figure 3 below.

Upon a triggering event, an authentication process is started between the external server 41 and the transponder unit 30. As is illustrated in Figure 2A, the triggering event may comprise a request from the user 2 to update the transponder unit's software. The portable electronic device 42 may send a corresponding triggering request to the external server 41. After the external server 41 receives such a request, an authentication process is started between the external server 41 and the transponder unit 30. Once the transponder unit 30 has been successfully authenticated, the external server generates a new secret key. The external server 41 then uses this new secret key in order to encrypt the software data to be sent to the transponder unit 30. The software data may be packed into a file. The encrypted file is then sent to the transponder unit 30. The transponder unit 30 decrypts the file und may then update its software. The file to be sent to the transponder unit 30 may be a hexadecimal source file (hex file), for example. The file may be sent directly from the external server 41 to the transponder unit 30, as is illustrated in Figure 2A. According to another example however, the file is first sent from the external server 41 to the portable electronic device 42, which then forwards the file to the transponder unit 30.

By generating a new secret key each time a file is to be transmitted from the external server 41 to the transponder unit 30 (each time a software update is to be performed), the security of the system is increased.

The triggering event being a user request as has been described with respect to Figure 2A above, however, is only an example. It is also possible that the external server 41 first sends a corresponding request to the portable electronic device 42. For example, the external server 41 may send an according request whenever a software update for the transponder unit's software is available. The user 2 may be required to accept this request. This is schematically illustrated in Figure 2B.

According to one example, a message or push message may be sent to the portable electronic device, and the user 2 may confirm the request via a user interface of the portable electronic device 42. Once the external server's request has been accepted by the user 2, the authentication, key generation and file sending process may be carried out in the same way as has been described with respect to Figure 2A above.

A communication channel between the transponder unit 30 and the portable electronic device 42 may be a channel using the Bluetooth low-energy (BLE) standard, for example. Any other standards, however. May also be used for communicating between the transponder unit 30 and the portable electronic device 42. The transponder unit 30 may comprise a communication (e.g., dedicated BLE) microcontroller, for example, which is configured to perform the communication with the external server 41 and/or with the portable electronic device 42. The transponder unit 30 may further comprise a specific key microcontroller, for example, which is configured to decrypt the files received by the communication microcontroller. The communication microcontroller and the specific key microcontroller may be internally coupled to each other by means of a serial interface, for example (e.g., SPI, 12C, or similar).

The entire message flow in the system between the external server 41 and the transponder unit 30 may be encrypted. In particular, the communication transferring the (hex) files may be encrypted, using a new secret key for each transmission. The transponder unit 30 knows the corresponding keys and is therefore able to decrypt the received files. The portable electronic device 42 on the other hand may not know the corresponding keys and may merely act as a gateway which forwards the files if the files are not sent directly from the external server 41 to the transponder unit 30. The communication microcontroller of the transponder unit 30 also merely acts as a gateway which forwards the received files. Only the specific key microcontroller of the transponder unit 30 may know the required keys for decryption.

As has been mentioned above, the vehicle 10 itself may not be required during the flashing process. Generally, the transponder unit 30 is known to the vehicle 10. That is, the transponder unit 30 is known as an authorized unit to the vehicle 10. Only requests of authorized transponder units 30 are considered by the vehicle 10. Requests from unauthorized transponder units which do not belong to the respective vehicle will be disregarded. Usually, the transponder unit 30 and the vehicle 10 are linked to each other by the car manufacturer before first shipping the vehicle 10 to a user. However, in some cases it may happen that the corresponding authentication data is lost during a flashing process (during a software update). Therefore, in some cases it may be necessary to perform a further learning process between the transponder unit 30 and the vehicle 10 after a flashing process has been completed. This is exemplarily illustrated in Figure 3. During this re-learning procedure, the transponder unit 30 is again confirmed as an authenticated unit by the vehicle 10. That is, after performing the re-learning procedure, the transponder unit 30 is again allowed to request access to the vehicle, request start of the vehicle, and perform any other possible actions, even if this permission was lost during a previous software update.

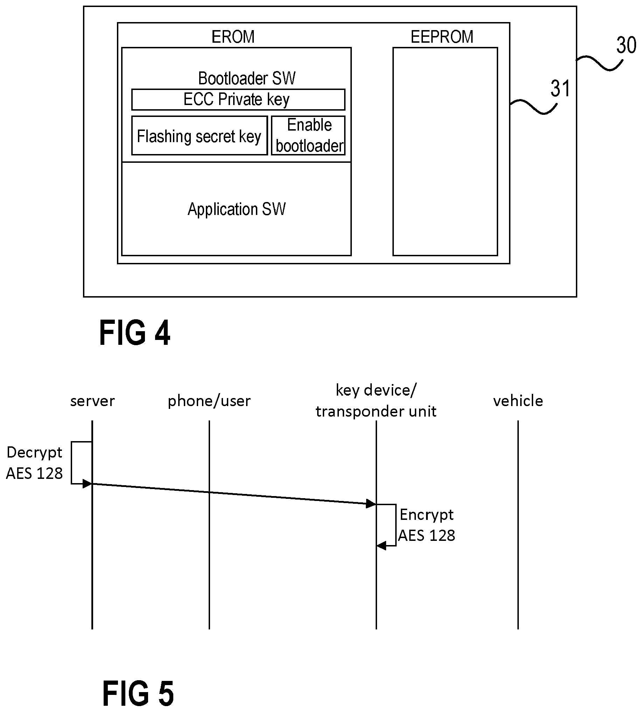

An exemplary specific key microcontroller 31 is schematically illustrated in Figure 4. The specific key microcontroller 31 is arranged inside (is part of) the transponder unit 30. The transponder unit 30 may further comprise other units (e.g., communication or BLE microcontroller), however, such units are not specifically illustrated in Figure 4 for the sake of clarity. In the example of Figure 4, the specific key microcontroller 31 comprises an EPROM (or EROM) memory (EPROM = Erasable Programmable Read-Only Memory) and an EEPROM memory (Electrically Erasable Programmable Read-Only Memory). The EPROM memory may comprise a bootloader software and an application specific software. The bootloader software is usually loaded and executed by the firmware of a device. The bootloader software usually loads parts of the operating system, usually a kernel. The firmware is a specific class of software that provides low-level control for a device's specific hardware. Firmware can either provide a standardized operating environment for the device's more complex software (allowing more hardware-independence), or, for less complex devices, act as the device's complete operating system, performing all control, monitoring and data manipulation functions.

The EPROM is generally flashed once during or at the end of the production of the electronic key (of the transponder unit 30). Afterwards, this monitor and download interface is usually disabled. An ECC (Error Detection and Correction) private key may be stored inside the EPROM. Error detection and correction is a technique that enables reliable delivery of digital data over unreliable communication channels. Many communication channels are subject to channel noise, and thus errors may be introduced during transmission from the source to a receiver. Error detection techniques allow detecting such errors, while error correction enables reconstruction of the original data in many cases. All error-detection and correction schemes add some redundancy (i.e., some extra data) to a message, which receivers can use to check consistency of the delivered message, and to recover data that has been determined to be corrupted.

Error-detection and correction schemes can be either systematic or non-systematic. In a systematic scheme, the transmitter sends the original data, and attaches a fixed number of *check bits* (or *parity data*), which are derived from the data bits by some deterministic algorithm. If only error detection is required, a receiver can simply apply the same algorithm to the received data bits and compare its output with the received check bits. If the values do not match, an error has occurred at some point during the transmission. In a system that uses a non-systematic code, the original message is transformed into an encoded message carrying the same information and that has at least as many bits as the original message. The value remains fixed (won't be changed) during the lifetime of the transponder unit 30, but is unique for each private key.

The flashing secret key values and the enable bootloader values may be changed during the lifetime of the transponder unit 30. The bootloader software handles writing on the EPROM (application software part only) and further handles writing on the EEPROM as well as the flashing secret key and enable bootloader variables.

In addition to the customer application, the application software implements the authentication mechanism and the generation of the new flashing secret key. The application software further handles the flashing secret key and the enable bootloader variables.

Now referring to Figure 5, a method for operating a system comprising an electronic key (transponder unit 30) is schematically illustrated by means of a sequence diagram. The communication messages sent between the external server 41 and the transponder unit 30 may be encrypted using the Advanced Encryption Standard (AES), also known by its original name Rijndael which is a specification for the encryption of electronic data established by the U.S. National Institute of Standards and Technology (NIST). According to one example, the AES-128 standard is used for encryption. This is schematically indicated in Figure 5 by means of a message sent from the external server 41 to the transponder unit 30 (electronic key). The message is encrypted by the external server 41 before sending it, using the Advanced Encryption Standard (AES), and is decrypted by the transponder unit 30 after receipt, using the Advanced Encryption Standard (AES). Encrypted messages, however, can also be sent from the transponder unit 30 to the external server 41 (not illustrated in Figure 5). The specific key microcontroller of the transponder unit 30 may have an AES encryption function implemented as hardware. However, an inverted operation implemented in software is also possible. Encryption may take a longer amount of time using a software implementation, as compared to a hardware implementation.

Secret keys involved in the process that has been described with respect to Figure 5 above may be an Elliptic Curve Cryptology (ECC) private key and an AES flashing secret key, for example. Such keys may be exchanged between the transponder unit 30 (electronic key) and the external server 41 during production of the transponder unit 30 during a dedicated learning procedure. After completion of this learning procedure, the same secret keys may be stored in both the external server 41 and the transponder unit 30. The ECC private key remains unchanged during the lifetime of the transponder unit 30, and the AES flashing key is changed with each authentication bootloader enable request (each time a software update on the transponder unit 30 is required).

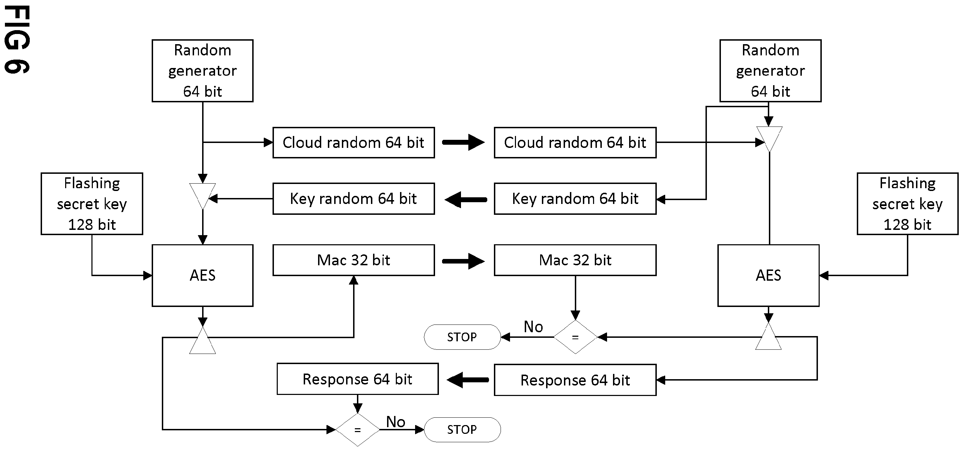

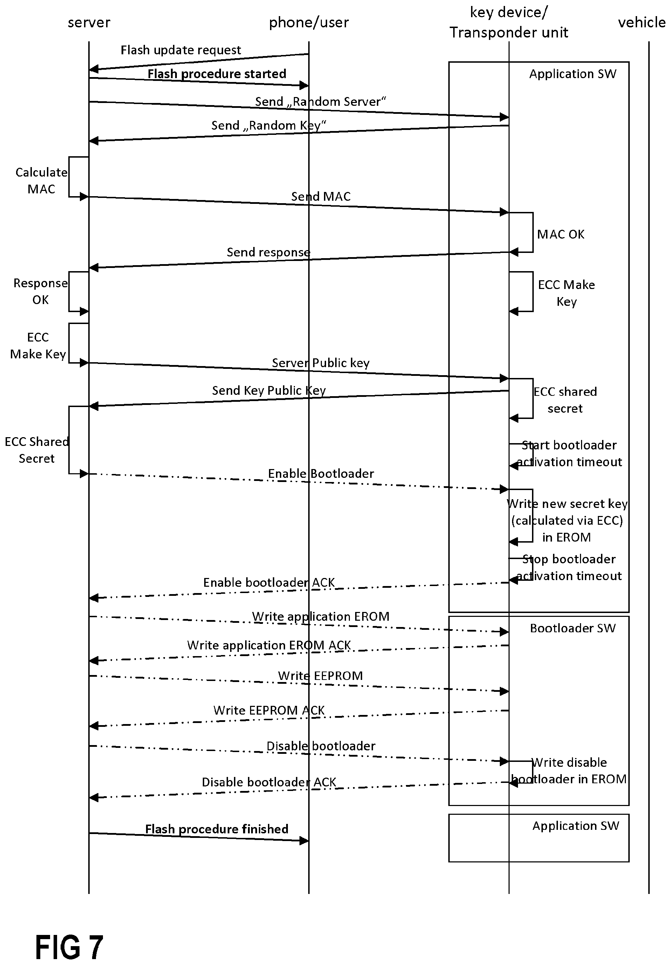

Now referring to Figures 6 and 7, an authentication procedure between the external server 41 and the transponder unit 30 which results in the generation of a new (AES flashing) secret key is exemplarily illustrated by means of a flow diagram and a sequence diagram, respectively.

First, a flash update request may be received from the portable electronic device 42 (e.g., the user's phone). The external server 41 may then start the flash procedure. As has been described above, alternatively, the external server 41 may send a flash update request to the user's portable electronic device 42, which has to be confirmed by the user 2. Once the flash procedure has been started, a random server key (key length, e.g., 64 bit) may be sent from the external server 41 to the transponder unit 30. The transponder unit 30 receives this random server key and, in response, sends a random key device key (key length, e.g., 64 bit) back to the external server 41. After receiving the random key device key, the external server 41 calculates a message authentication code (MAC) (MAC length, e.g., at least 32 bit). This MAC is sent back to the transponder unit 30 which verifies it. If the transponder unit 30 is not able to verify the MAC, the procedure is stopped at this point. Otherwise, if the MAC is verified by the transponder unit 30, the transponder unit 30 sends a confirming response (response length, e.g., 64 bit) to the external server 41 and further generates an ECC key.

After receiving the response from the transponder unit 30, the external server 41 also generates an ECC public key and subsequently sends it to the transponder unit 30. The transponder unit 30 then generates an ECC shared secret key and sends a key public key back to the external server 41. Afterwards, the bootloader activation timeout is started and the transponder unit 30 waits for the activation of the bootloader from the external server 41. The external server 41, upon receipt of the ECC key public key, generates an ECC shared secret key as well and enables the bootloader of the transponder unit 30. The bootloader then writes the new secret key in the EPROM memory of the transponder unit 30. The bootloader activation timeout may subsequently be stopped and an acknowledgement that the bootloader has been enabled may be sent to the external server 41.

If the enable bootloader request is not sent from the external server 41 in time and the transponder unit 30 reaches the start bootloader activation timeout, the secret key that has been calculated via ECC will not be stored in the EPROM and a new procedure may be started using the previous secret key.

Before and after storing the new ECC secret key in the EPROM, a restart of the procedure may be required if a communication error occurs. The authentication, however, will be carried out by the external server using the secret key that is currently stored in the EPROM of the transponder unit 30.

Up to this point, all actions required by the transponder unit 30 are performed by the application software. After enabling the bootloader and stopping the bootloader activation timeout, the bootloader software may take over. The external server 41, after receipt of the bootloader enable acknowledgement sends a write application EPROM request to the transponder unit 30 which answers this with an acknowledgement. A write EEPROM request from the external server 41 is followed by an according acknowledgement of the transponder unit 30. Subsequently, the bootloader is disabled by the external server 41. This is noted down in the EPROM memory of the transponder unit 30 and further acknowledged to the external server 41. The bootloader software activity may stop at this point and the external server 41 may finish (stop) the flash procedure. The end of the flash procedure may be communicated to the portable electronic device 42.

Referring to Figure 7, any messages sent between the external server 41 and the portable electronic device 42 may not be encrypted at all, as such messages generally are only informatory messages. All messages sent between the external server 41 and the transponder unit 30 that are illustrated in solid lines in Figure 7, however, may be encrypted, e.g., using an AES flashing secret key. All messages sent between the external server 41 and the transponder unit 30 that are marked in dotdashed lines in Figure 7 may be encrypted with a new flashing secret key that has been calculated via ECC.

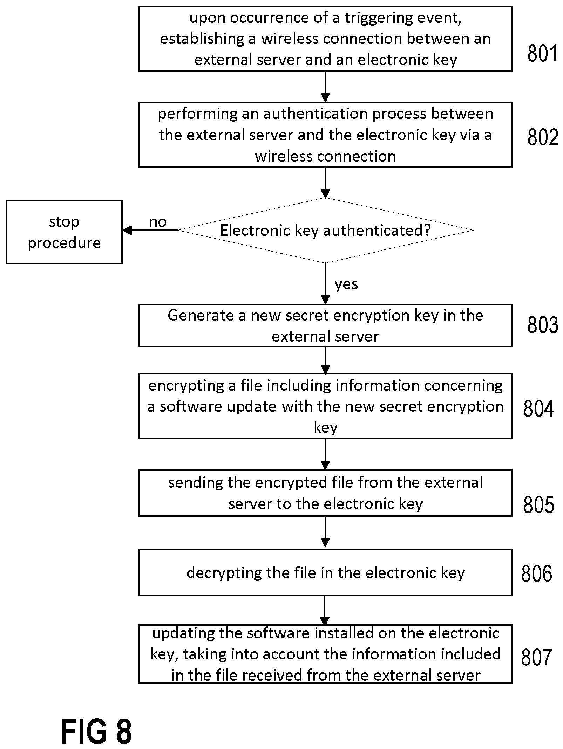

Now referring to Figure 8, an exemplary method for at least partly updating software installed on an electronic key 30 for a vehicle 10 is illustrated by means of a flow diagram. The method comprises, upon occurrence of a triggering event, establishing a wireless connection between an external server 41 and the electronic key 30 (step 801). The method further comprises performing an authentication process between the external server 41 and the electronic key 30 via the wireless connection (step 802). If the electronic key 30 has been authenticated as being the related electronic key 30 to the vehicle 10, a new secret encryption key is generated in the external server 41 (step 803). The method further comprises encrypting a file including information concerning the software update with the new secret encryption key (step 804), sending the encrypted file from the external server 41 to the electronic key 30 (step 805), decrypting the file in the electronic key 30 (step 806), and updating the software taking into account the information included in the file received from the external server 41 (step 807).

The new secret key that is generated by the external server 41 may not have been used to encrypt a file before and may subsequently not be used for any other encryption processes.

### List of Reference Signs

- 2: user
- 10: vehicle
- 20: control unit
- 30: electronic key/transponder unit
- 31: specific key microcontroller
- 41: external server
- 42: portable electronic device

## Claims

1. A method for at least partly updating software installed on an electronic key (30) for a vehicle (10) comprises
upon occurrence of a triggering event, establish a wireless connection between an external server (41) and the electronic key (30);
perform an authentication process between the external server (41) and the electronic key (30) via the wireless connection;
if the electronic key (30) has been authenticated as being the related electronic key (30) to the vehicle (10), generate a new secret encryption key in the external server (41);
encrypting a file including information concerning the software update with the new secret encryption key;
sending the encrypted file from the external server (41) to the electronic key (30);
decrypting the file in the electronic key (30), and
at least partly updating the software installed on the electronic key (30), taking into account the information included in the file received from the external server (41).

2. The method of claim 1, wherein the new secret encryption key has not been used to encrypt another file before and is subsequently not used for any other encryption processes.

3. The method of claim 1 or 2, wherein the triggering event comprises a user request.

4. The method according to claim 1 or 2, wherein the triggering event comprises an inquiry of the external server (41) followed by a user confirmation.

5. The method according to claim 3 or 4, wherein the user request or confirmation is received via a portable electronic device (42).

6. The method of any of claims 1 to 5, wherein the new secret encryption key generated by the external server (41) is generated using an Advanced Encryption Standard (AES).

7. The method of any of the preceding claims, wherein the file sent from the external server (41) to the electronic key (30) is a hexadecimal source file.

8. An electronic key (30) for a vehicle (10), wherein the electronic key (30) comprises
a communication microcontroller; and
a specific key microcontroller, wherein
the communication microcontroller is configured to perform an authentication process between the electronic key (30) and an external server (41) and via a wireless connection;
the communication controller is further configured to, after the electronic key (30) has been authenticated as being the related electronic key (30) to the vehicle (10), receive an encrypted file from the external server (41), the file including information concerning a software update, wherein the file is encrypted with a new secret encryption key generated in the external server (41);
the communication microcontroller is further configured to forward the file to the specific key microcontroller;
the specific key microcontroller is configured to decrypt the file; and
the specific key microcontroller is further configured to at least partly update a software installed on the electronic key (30), taking into account the information included in the file received from the external server (41).

9. The electronic key (30) of claim 8, wherein the specific key microcontroller is further configured to, via the communication microcontroller, send a random key to the external server (41), wherein the random key may be used by the external server (41) for the generation of the new secret encryption key.

10. The electronic key (30) of claim 8 or 9, wherein the specific key microcontroller is further configured to, after the electronic key (30) has been authenticated as being the related electronic key (30) to the vehicle (10), generate a new secret encryption key, and to use this new secret encryption key for decrypting the file received from the external server (41).
